(19) Europäisches Patentamt

European Patent Office

Office européen des brevets

(11) Numéro de publication : **0 022 008**
**B1**

(12) **FASCICULE DE BREVET EUROPÉEN**

(45) Date de publication du fascicule du brevet :
15.08.84

(21) Numéro de dépôt : **80400925.6**

(22) Date de dépôt : **20.06.80**

(51) Int. Cl.³ : **G 02 B 23/00**, A 61 B 1/00

(54) **Relais optique utilisé pour transférer une image d'un point à un autre sur un axe optique.**

(30) Priorité : **25.06.79 FR 7916266**

(43) Date de publication de la demande :
**07.01.81 Bulletin 81/01**

(45) Mention de la délivrance du brevet :
**15.08.84 Bulletin 84/33**

(84) Etats contractants désignés :
**CH DE GB LI**

(56) Documents cités :
**DE-A- 2 556 717**
**DE-B- 1 146 282**
**FR-A- 1 562 267**
**FR-A- 2 215 922**
**US-A- 3 436 142**
**US-A- 3 874 783**

(73) Titulaire : **METALLISATIONS ET TRAITEMENTS OPTIQUES M.T.O.**
**11 rue Ampère**
**F-91300 Massy (FR)**

(72) Inventeur : **Bel, Roger Pierre**
**46 rue Crebillon**
**F-94300 Vincennes (FR)**

(74) Mandataire : **Lemoine, Robert et al**
**Cabinet Malémont 42, Avenue du Président Wilson**
**F-75116 Paris (FR)**

**Description**

La présente invention concerne un relais optique pour transférer une image d'un point à un autre sur un axe optique.

Le document FR-A-2 215 922 décrit des relais optiques formés d'au moins une lentille en forme de barreau, mais qui ne sont pas aptes à transmettre dans de bonnes conditions l'image d'un objet situé sur l'une de leur faces extrêmes. De plus, ces relais ne permettent pas le transfert d'images le long d'un axe optique coudé.

Le document FR-A-1 562 267 décrit quant à lui un microscope comportant un objectif de grossissement formé d'au moins une lentille et situé entre un dispositif optique servant d'aiguille de percement et un dispositif d'observation en fibre optique. Le montage de ce microscope pose toutefois de nombreux problèmes car le positionnement du dispositif optique et du dispositif d'observation par rapport à l'objectif de grossissement doit être réalisé avec une très grande précision.

La présente invention se propose de remédier aux inconvénients évoqués ci-dessus et, pour ce faire, elle a pour objet un relais optique qui se caractérise en ce qu'il comprend deux systèmes optiques composés chacun d'au moins deux éléments optiques épais dont l'un est convergent et l'autre divergent, en ce que l'indice, l'épaisseur et les rayons de courbure des éléments optiques sont choisis pour que les faces extrêmes des systèmes optiques formés par ceux-ci soient conjuguées, et en ce qu'un conduit d'image en fibre optique relie les deux systèmes optiques, chacune des deux faces extrêmes du conduit d'image en fibre optique étant en contact avec une face de chacun des systèmes optiques à relier.

Ce relais évite d'avoir à rejeter les faisceaux lumineux à l'infini entre chaque système optique, ce qui permet à l'image transférée d'être d'excellente qualité. Cet avantage est encore amélioré par le fait qu'il n'y a pas de volume d'air entre les deux systèmes optiques.

Selon différents modes de réalisation conformes à l'invention, les éléments optiques d'un même système optique peuvent être ou non collés. Plus précisément, lorsque ces éléments sont collés, leurs surfaces de collage ont le même rayon de courbure. Par contre, lorsqu'ils sont séparés par de l'air, leurs surfaces en regard ont des rayons de courbure voisins.

Conformément à l'invention, il est par ailleurs avantageux que les indices de réfraction de deux éléments optiques successifs d'un même système aient des valeurs différant d'au moins 0,01. Il est en outre souhaitable que les constringences des éléments optiques convergents aient des valeurs supérieures à celles des éléments optiques divergents et en diffèrent d'au moins 1,1.

Selon une variante de réalisation, le conduit d'image se présente sous la forme d'une plaque mince dans laquelle les fibres sont orientées perpendiculairement aux faces des deux systèmes contre lesquelles elles s'appuient. La plaque de fibres optiques constitue ainsi, entre les deux systèmes qu'elle relie, un « relais mince » dont le grandissement entre les faces extrêmes associées est toujours unitaire. On notera ici qu'un relais mince peut facilement être taillé sous la forme d'un prisme, permettant ainsi de couder aisément l'axe optique.

Selon une autre variante de réalisation, le conduit d'image est coudé, les extrémités des fibres qui le constituent étant orientées perpendiculairement aux faces extrêmes des deux systèmes optiques contre lesquelles elles s'appuient. Il est possible ainsi de couder le trajet optique tout en évitant une déformation de l'image et l'apparition d'aberrations.

Selon encore une autre variante de réalisation permettant de réaliser directement une variation angulaire du chemin optique, le conduit d'image est constitué par une plaque de fibres optiques taillée sous la forme d'un prisme, les fibres étant ou non orientées perpendiculairement aux faces extrêmes des deux systèmes contre lesquelles elles s'appuient.

Grâce à cette plaque, il est possible de couder le chemin optique sans rencontrer les problèmes qui apparaîtraient avec un prisme classique.

Les risques de torsion des fibres sont en effet négligeables devant l'épaisseur de la plaque.

Plusieurs modes d'exécution de la présente invention seront décrits ci-après en référence aux dessins annexés dans lesquels :

Les figures 1 à 7 montrent chacune schématiquement un système optique formant un relais optique ;

La figure 8 montre schématiquement un relais optique composé de deux systèmes optiques collés ;

Les figures 9 à 12 montrent chacune schématiquement un relais optique conforme à l'invention composé de deux systèmes optiques reliés par un conduit d'image en fibres optiques ; et,

La figure 13 représente schématiquement un relais optique disposé dans un système endoscopique auto-éclairant.

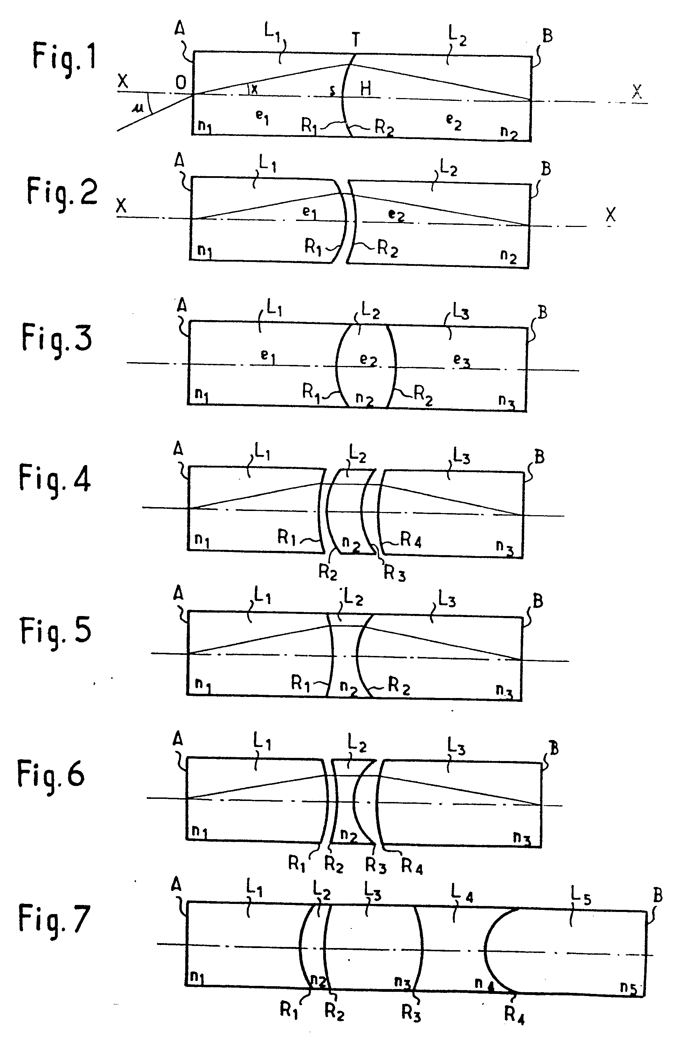

Le relais optique représenté sur la figure 1 comprend un système optique composé d'une lentille épaisse divergente $L_1$ et d'une lentille épaisse convergente $L_2$. La lentille $L_1$, qui a une épaisseur $e_1$ et un indice $n_1$, est réalisée avec une face plane A perpendiculaire à l'axe optique XX et une face concave de rayon de courbure $R_1$ située à l'opposé de la face A. Quant à la lentille $L_2$, qui a une épaisseur $e_2$ et un indice $n_2$, elle est réalisée à son tour avec une face plane B perpendiculaire à l'axe optique et une face convexe de rayon de courbure $R_2$ située à l'opposé de la face B.

Dans l'exemple représenté, les rayons $R_1$ et $R_2$ sont égaux tandis que les lentilles $L_1$ et $L_2$ sont

collées le long de leurs faces ayant le même rayon de courbure.

Conformément à l'invention, l'épaisseur, l'indice et le rayon des lentilles sont choisis pour que les faces A et B, qui constituent les faces extrêmes du relais optique, soient conjuguées. Ces différentes données satisfont en effet à la relation :

$$(n_1/n_2) \cdot (1/e_1) + [1 - (n_1/n_2)] \cdot (1/R_1) = (1/e_2)$$

Le rayon de courbure $R_1$ est alors donné par la relation :

$$R_1 = [e_1e_2(n_2 - n_1)]/[n_2e_1 - n_1e_2]$$

Considérons maintenant le rayon lumineux représenté sur la figure 1. Il satisfait à la relation classique :

$$\text{Sin } u = n_1 \text{ Sin } x$$

Lorsque SH = TH $\simeq R_1$ et que l'angle x prend sa valeur maximum, tg. x qui est égale à TH/(OS + SH) devient :

$$\text{tg. } x \simeq R_1/(R_1 + e_1)$$

Or, comme l'angle x est relativement faible par rapport à l'épaisseur $e_1$, on peut admettre que sa valeur maximum est donnée par la relation :

$$x = R_1/(R_1 + e_1)$$

Il s'ensuit que l'ouverture numérique u résultante qui est donnée par la formule :

$$\text{Sin } u = n_1 \text{ Sin } [R_1/(R_1 + e_1)]$$

est fonction de la valeur du rayon de courbure $R_1$ de la surface de collage des lentilles $L_1$ et $L_2$.

Le tableau ci-dessous donne à titre d'exemple quelques valeurs qu'il convient de donner au rayon $R_1$ pour que les faces A et B soient conjuguées, les épaisseurs $e_1$ et $e_2$ étant respectivement égales à 50 et 70 tandis que les indices $n_1$ et $n_2$ ont chacun quatre valeurs différentes.

| $e_1$ = 50 | $n_1$ = 1,49 | 1,51680 | 1,56883 | 1,62004 |
|---|---|---|---|---|
| $e_2$ = 70 | $n_2$ = 1,92 | 1,62004 | 1,57444 | 1,51680 |
| $R_1$ | 7,514 | 1,9304 | 0,1041 | − 1,9094 |

Il ressort de ce tableau qu'il y aura en général intérêt à utiliser des couples de lentilles $L_1$ et $L_2$ dont les indices diffèrent d'au moins 0,01. Il est clair qu'une telle différence d'indices demandera, pour assurer la conjugaison, un rayon de courbure très faible. Plus cette différence s'accroîtra, plus le rayon de courbure deviendra grand et par la même, plus l'ouverture numérique sera élevée.

Pour être complet, on notera ici que le grandissement sous lequel travaille le relais optique représenté à la figure 1 est défini par l'expression :

$$g = (e_2/e_1) \cdot (n_2/n_1)$$

Le relais optique représenté sur la figure 2 comprend un système optique épais composé de deux lentilles $L_1$ et $L_2$ qui ne sont pas collées et dont les rayons $R_1$ et $R_2$ sont voisins. La condition pour que ses faces extrêmes A et B soient conjuguées est encore satisfaite lorsque :

$$R_1 = [e_1e_2(n_2 - n_1)]/[n_2e_1 - n_1e_2]$$

Les relais optiques représentés sur les figures 3 à 6 comprennent chacun un système optique épais composé de trois lentilles $L_1$, $L_2$, $L_3$ qui peuvent être collées (figures 3 et 5) ou légèrement espacées (figures 4 et 6). A titre d'exemples nullement limitatifs, on trouvera dans le tableau ci-dessous quatre séries de valeurs de $e_1$, $e_2$, $e_3$, $n_1$, $n_2$, $n_3$, $R_1$ et $R_2$, qui permettent d'assurer la conjugaison des faces extrêmes A et B d'un système optique composé de trois lentilles collées.

3

| $e_1$ | $e_2$ | $e_3$ | $n_1$ | $n_2$ | $n_3$ | $R_1$ | $R_2$ |
|---|---|---|---|---|---|---|---|
| 40 | 10 | 50 | 1,5178 | 1,62004 | 1,56883 | 2,723 | -1,581 |
| 80 | 5 | 40 | 1,4921 | 1,69004 | 1,9200 | 10,613 | 5,443 |
| 35 | 10 | 45 | 1,69004 | 1,4921 | 1,5168 | -4,099 | 0,745 |
| 30 | 5 | 50 | 1,5168 | 1, - | 1,69004 | -10,222 | 20,415 |

Le relais optique représenté sur la figure 7 comprend un système optique épais composé de cinq lentilles, le nombre de ces lentilles pourrait toutefois être bien supérieur pour autant que la conjugaison des faces A et B soit assurée.

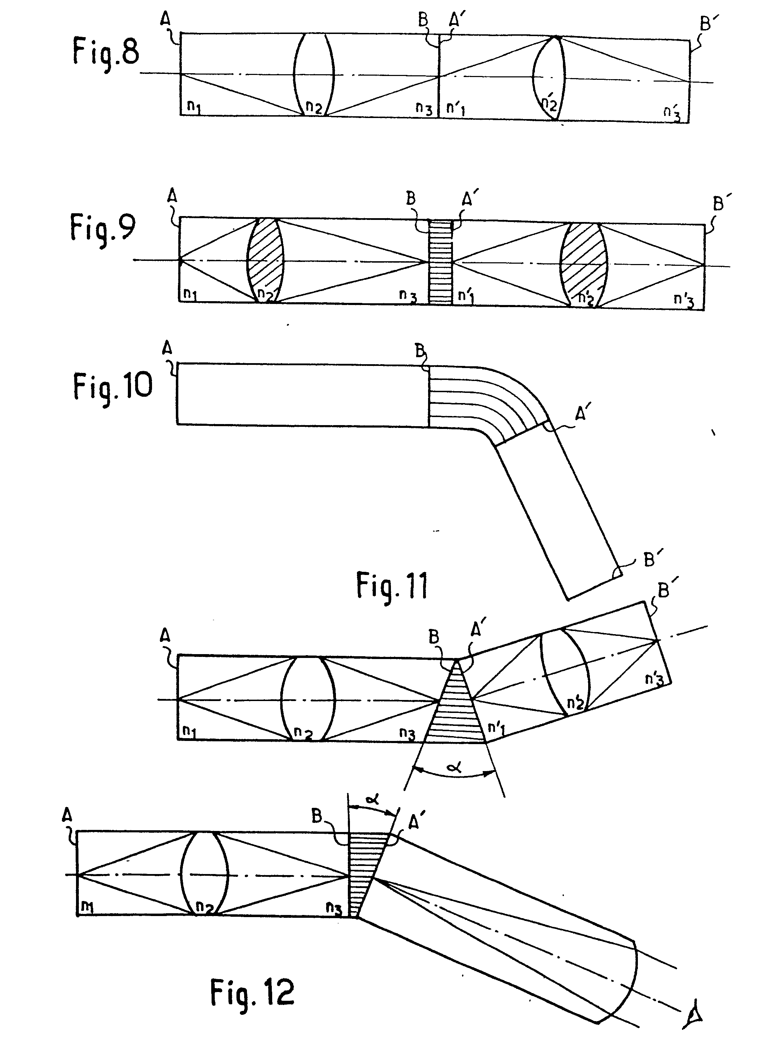

Le relais optique représenté sur la figure 8 comprend deux systèmes optiques épais collés l'un à l'autre. Leurs faces extrêmes (A, B) respectivement (A', B') sont conjuguées, de sorte qu'entre chacun d'eux, le transfert de l'image est assuré autrement que par un transfert à l'infini.

On notera ici que le relais selon la figure 8 transfère une image redressée.

Le relais optique représenté sur la figure 9 comprend deux systèmes optiques épais dont les faces extrêmes (A, B ; A', B') sont conjuguées, et une plaque de fibres optiques interposée entre les faces B et A'. La plaque de fibres optiques, qui constitue un « relais mince » dont le grandissement est unitaire entre les faces B et A', assure, entre les deux faces conjuguées de chaque système, une liaison évitant un transfert à l'infini des faisceaux.

Le relais représenté sur la figure 10 comprend deux systèmes optiques épais dont les faces extrêmes (A, B ; A', B') sont conjuguées, et un conduit d'image en fibres optiques interposé entre les faces B et A'. Le conduit est coudé tandis que les extrémités de ses fibres sont respectivement orientées perpendiculairement aux faces B et A' contre lesquelles elles s'appuient. Constituant un relais dont le grandissement entre les faces B et A' est toujours unitaire, et ce quel que soit l'angle formé entre ces deux faces, le conduit permet de couder l'axe optique sans qu'apparaissent les problèmes que l'on rencontre habituellement en utilisant un prisme classique.

Les relais représentés sur les figures 11 et 12 comprennent deux systèmes optiques épais dont les faces extrêmes (A, B ; A', B') sont conjuguées, et une plaque de fibres optiques taillée sous la forme d'un prisme, cette plaque étant interposée entre les faces B et A'. On notera que les fibres peuvent ou non être orientées perpendiculairement aux faces B et A'.

Grâce à la plaque taillée sous la forme d'un prisme, il est encore possible de couder directement l'axe optique sans rencontrer les problèmes apparaissant avec un prisme classique. En effet, les risques de torsion des fibres sont négligeables en raison de l'épaisseur à employer.

L'image de la face A, qui se forme sur la face B, est transférée par la plaque sur la face A' avec, il est vrai, une anamorphose due à la valeur $\alpha$ de l'angle du prisme. Cette anamorphose, proportionnelle à $1/\cos\alpha$ n'est toutefois pas de nature à supplanter la définition $d\varnothing$ de l'image qui est donnée par la relation :

$$d\varnothing = 1,221/(2n\,\mathrm{Sin}\,u)$$

En effet, Sin u est toujours tel que $d\varnothing$ est largement supérieure au diamètre des fibres optiques utilisées. Etant donné que les fibres utilisées ont en pratique un diamètre de l'ordre de 6 $\mu$m et que Sin u n'excède guère 0,2,

$$d\varnothing = 0,000\,5/0,4 = 0,015\ \mu m$$

Cette valeur étant largement supérieure à une anamorphose due à une déviation de 30° par exemple.

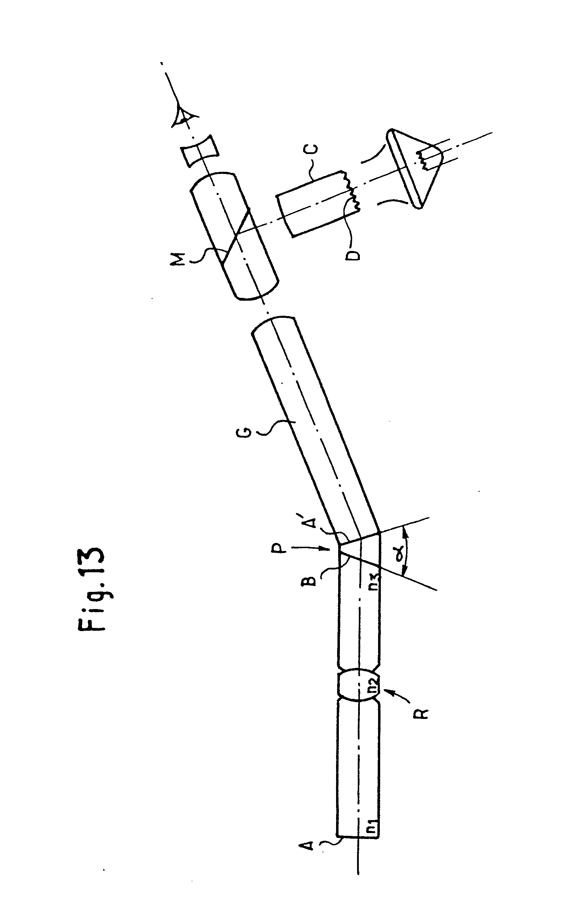

La figure 13 montre un relais optique conforme à l'invention utilisé dans la réalisation d'un endoscope auto-éclairant. Ce relais comprend un système optique épais R composé de trois éléments et dont les faces extrêmes A et B sont conjuguées, un guide G qui n'est autre qu'une loupe de Stanhope, et un prisme P taillé dans une plaque de fibres optiques orientées perpendiculairement à la face B du système optique R et à la face A' de la loupe de Stanhope.

L'image de A, se formant en B est reprise par la face A', puis rejetée à l'infini à la sortie de la loupe.

L'endoscope comprend par ailleurs une seconde loupe de Stanhope C dont la face plane D est dépolie. Cette face est conjuguée de la face de collage A' et par l'intermédiaire du miroir semi-transparent M, la conjugaison (D, A') assure par le relais R l'éclairement de la face A.

On notera que les relais optiques conformes à l'invention pourraient également être utilisés comme véhicules de faisceaux laser.

# 0 022 008

## Revendications

1. Relais optique pour transférer une image d'un point à un autre sur un axe optique, caractérisé en ce qu'il comprend deux systèmes optiques composés chacun d'au moins deux éléments optiques épais ($L_1$, $L_2$, $L_3$...) dont l'un est convergent et l'autre divergent, en ce que l'indice ($n_1$, $n_2$, $n_3$...), l'épaisseur ($e_1$, $e_2$, $e_3$...) et les rayons de courbure ($R_1$, $R_2$, $R_3$...) des éléments optiques sont choisis pour que les faces extrêmes (A, B ; A', B') des systèmes optiques formés par ceux-ci soient conjuguées, et en ce qu'un conduit d'image en fibre optique relie les deux systèmes optiques, chacune des deux faces extrêmes du conduit d'image en fibre optique étant en contact avec une face de chacun des systèmes optiques à relier.

2. Relais optique selon la revendication 1, caractérisé en ce que les éléments optiques ($L_1$, $L_2$, $L_3$...) d'au moins l'un des systèmes optiques sont collés, leurs surfaces de collage ayant le même rayon de courbure ($R_1$, $R_2$, $R_3$...).

3. Relais optique selon la revendication 1, caractérisé en ce que les éléments optiques ($L_1$, $L_2$, $L_3$...) d'au moins l'un des systèmes optiques sont espacés, leurs surfaces en regard ayant des rayons de courbure ($R_1$, $R_2$, $R_3$...) voisins.

4. Relais optique selon l'une quelconque des revendications précédentes, caractérisé en ce que les indices de réfraction ($n_1$, $n_2$, $n_3$...) de deux éléments optiques ($L_1$, $L_2$, $L_3$...) successifs d'un même système ont des valeurs différant d'au moins 0,01.

5. Relais optique selon l'une quelconque des revendications précédentes, caractérisé en ce que les constringences des éléments optiques convergents ont des valeurs supérieures à celles des éléments optiques divergents et en diffèrent d'au moins 1,1.

6. Relais optique selon l'une quelconque des revendications 1 à 5, caractérisé en ce que le conduit d'image se présente sous la forme d'une plaque mince dans laquelle les fibres sont orientées perpendiculairement aux faces (B, A') des deux systèmes contre lesquelles elles s'appuient.

7. Relais optique selon l'une quelconque des revendications 1 à 5, caractérisé en ce que le conduit d'image est coudé, les extrémités des fibres qui le constituent étant orientées perpendiculairement aux faces extrêmes (B, A') des deux systèmes optiques contre lesquelles elles s'appuient.

8. Relais optique selon l'une quelconque des revendications 1 à 5, caractérisé en ce que le conduit d'image est constitué par une plaque de fibres optiques taillée sous la forme d'un prisme, les fibres étant ou non orientées perpendiculairement aux faces extrêmes (B, A') des deux systèmes contre lesquelles elles s'appuient.

9. Système endoscopique auto-éclairant ou véhicule de faisceaux laser comportant un relais optique selon l'une quelconque des revendications précédentes.

## Claims

1. An optical relay for transferring an image from one point to another along an optical axis, characterized in that it comprises two optical systems each formed from at least two thick optical elements ($L_1$, $L_2$, $L_3$...) one of which is convergent and the other divergent, in that the index ($n_1$, $n_2$, $n_3$...), the thickness ($e_1$, $e_2$, $e_3$...) and the radii of curvature ($R_1$, $R_2$, $R_3$...) of the optical elements are chosen so that the end faces (A, B ; A', B') of the optical systems formed thereby are conjugate, and in that an optical fiber image duct connects the two optical systems together, each of the two end faces of the optical fiber image duct being in contact with one face of each of the optical systems to be connected together.

2. Optical relay according to claim 1, characterized in that the optical elements ($L_1$, $L_2$, $L_3$...) of at least one of the optical systems are bonded, their bonding surfaces having the same radius of curvature ($R_1$, $R_2$, $R_3$...).

3. Optical relay according to claim 1, characterized in that the optical elements ($L_1$, $L_2$, $L_3$...) of at least one of the optical systems are spaced, their facing surfaces having closely related radii of curvature ($R_1$, $R_2$, $R_3$...).

4. Optical relay according to any one of the preceding claims, characterized in that the indices of refraction ($n_1$, $n_2$, $n_3$...) of two successive optical elements ($L_1$, $L_2$, $L_3$...) of the same system have values differing by at least 0.01.

5. Optical relay according to any one of the preceding claims, characterized in that the constringences of the convergent optical elements have values greater than those of the divergent optical elements and differ therefrom by at least 1.1.

6. Optical relay according to any one of claims 1 to 5, characterized in that the image duct is in the form of a thin plate in which the fibers are orientated perpendicularly to the faces (B, A') of the two systems against which they bear.

7. Optical relay according to any one of claims 1 to 5, characterized in that the image duct is bent, the ends of the fibers which form it being orientated perpendicularly to the end faces (B, A') of the two optical systems against which they bear.

8. Optical relay according to any one of claims 1 to 5, characterized in that the image duct is formed by an optical fiber plate cut in the shape of a prism, the fibers being orientated or not perpendicularly to

5

the end faces (B, A′) of the two systems against which they bear.

9. Self illuminating endoscopic or laser beam vehicle comprising an optical relay according to any one of the preceding claims.

**Ansprüche**

1. Optisches Relais zum Übertragen eines Bildes von einem Punkt zu einem anderen auf einer optischen Achse, dadurch gekennzeichnet, daß es zwei optische Systeme umfaßt, jedes aus wenigstens zwei dicken optischen Elementen ($L_1$, $L_2$, $L_3$...), deren eines konvergent und deren anderes divergent ist, daß der Index ($n_1$, $n_2$, $n_3$...), die Dicke ($e_1$, $e_2$, $e_3$...) und die Krümmungsradien ($R_1$, $R_2$, $R_3$...) der optischen Elemente so gewählt sind, daß die Endflächen (A, B ; A′, B′) der von ihnen gebildeten optischen Systeme konjugiert sind, und daß eine Bildleitung aus Faseroptik die beiden optischen Systeme verbindet, wobei jede der beiden Endflächen der Bildleitung aus Faseroptik mit einer Fläche eines jeden der zu verbindenden optischen Systeme in Kontakt ist.

2. Optisches Relais nach Anspruch 1, dadurch gekennzeichnet, daß die optischen Elemente ($L_1$, $L_2$, $L_3$...) wenigstens eines der optischen Systeme geklebt sind, wobei ihre Klebeflächen den gleichen Krümmungsradius ($R_1$, $R_2$, $R_3$...) haben.

3. Optisches Relais nach Anspruch 1, dadurch gekennzeichnet, daß die optischen Elemente ($L_1$, $L_2$, $L_3$...) wenigstens eines der optischen Systeme auf Abstand sind, wobei ihre gegenüberliegenden Oberflächen benachbarte Krümmungsradien ($R_1$, $R_2$, $R_3$...) haben.

4. Optisches Relais nach irgend einem der vorhergehenden Ansprüche, dadurch gekennzeichnet, daß die Brechungsindices ($n_1$, $n_2$, $n_3$...) der beiden aufeinanderfolgenden optischen Elemente ($L_1$, $L_2$, $L_3$...) eines gleichen Systems sich um wenigstens 0,01 unterscheidende Werte haben.

5. Optisches Relais nach irgend einem der vorhergehenden Ansprüche, dadurch gekennzeichnet, daß die Reziprokwerte der Dispersionskraft der konvergenten optischen Elemente höhere Werte als die der divergenten optischen Elemente haben und sich um wenigstens 1,1 unterscheiden.

6. Optisches Relais nach irgend einem der Ansprüche 1 bis 5, dadurch gekennzeichnet, daß sich die Bildleitung in Form einer winzigen Platte darbietet, in der die Fasern senkrecht zu den Flächen (B, A′) der beiden Systeme, gegen die sie sich stützen, orientiert sind.

7. Optisches Relais nach irgend einem der Ansprüche 1 bis 5, dadurch gekennzeichnet, daß die Bildleitung gekrümmt ist, wobei die Enden der Fasern, die sie bilden, senkrecht zu den Endflächen (B, A′) der beiden optischen Systeme, gegen die sie sich stützen, orientiert sind.

8. Optisches Relais nach irgend einem der Ansprüche 1 bis 5, dadurch gekennzeichnet, daß die Bildleitung aus einer Platte optischer Fasern, in Form eines Prismas gestaltet, besteht, wobei die Fasern senkrecht zu den Endflächen (B, A′) der beiden Systeme, gegen die sie sich stützen, orientiert sind oder nicht.

9. Selbst-beleuchtendes endoskopisches System oder Laserbündelträger, ein optisches Relais gemäß irgend einem der vorhergehenden Ansprüche aufweisend.

0 022 008

Fig.1 / Fig.2 / Fig.3 / Fig.4 / Fig.5 / Fig.6 / Fig.7

Fig.8

Fig.9

Fig.10

Fig.11

Fig.12

# Fig.13

0 022 008